# EUROPÄISCHE PATENTSCHRIFT

(11) **EP 0 561 741 B1**
(45) Veröffentlichungstag und Bekanntmachung des Hinweises auf die Patenterteilung: **11.10.1995**
(21) Anmeldenummer: 93810186.2
(22) Anmeldetag: 15.03.1993
(51) Int. Cl.: A47J 31/40, A47J 31/46

(54) **Verfahren und Vorrichtung zur Zubereitung von Kaffeegetränken**
Coffee making process and device
Procédé et dispositif pour la préparation de café

(30) Priorität: 19.03.1992 DE 4208854
(43) Veröffentlichungstag der Anmeldung: 22.09.1993
(73) Patentinhaber: COSMEC S.r.l., I-24059 Urgnano, Bergamo (IT)
(72) Erfinder: Vetterli, Heinz Adolf, CH-8854 Siebnen (CH)
(74) Vertreter: Rottmann, Maximilian R.

(56) Entgegenhaltungen:
- EP-A- 486 433
- EP-A- 0 217 211
- EP-A- 0 270 141
- EP-A- 0 465 877
- EP-A- 0 486 434
- EP-A- 0 538 191
- DE-A- 4 119 559
- DE-C- 3 843 568
- FR-A- 1 118 772

## Beschreibung

Die vorliegende Erfindung bezieht sich auf eine Vorrichtung zur Zubereitung von Kaffeegetränken nach dem Oberbegriff des Patentanspruchs 1, und wie in der EP-A-486433 (veröffentlicht nach Prioritätsdatum) beschrieben.

Im besonderen ist hier von sogenannten vollautomatischen Kaffeemaschinen (Espressomaschinen) die Rede.

Am Beispiel einer solchen vollautomatischen Kaffeemaschine wird nachfolgend ein prinzipieller Kaffee-Getränke-Zubereitungszyklus geschildert.

Einer Brühkammer wird das für die Getränkezubereitung notwendige Kaffeepulver zudosiert. Dieses Kaffeepulver wird danach von einem beweglichen Kolben auf einen bestimmten Wert verdichtet. Von einer Pumpe wird Wasser aus einem Frischwasserbehälter gefördert und unter Druck gesetzt. Dieses Wasser durchläuft danach einen Heisswasserbereiter, um anschliessend das in der Brühkammer befindliche und verdichtete Kaffeepulver aufzubrühen. Das frisch zubereitete Kaffeegetränk fliesst schliesslich aus der Brühkammer heraus und über einen entsprechenden Auslass in eine entsprechend plazierte Kaffeetasse hinein.

Ein Nachteil, der all diesen vollautomatischen Kaffeemaschinen anhaftet, ist, dass nach jedem Getränke-Aufbereitungszyklus in der Kaffeemaschine Restwasser zurückbleibt. Als Restwasser wird dasjenige Wasser bezeichnet, welches von der Wasserpumpe aus dem Frischwasserbehälter gefördert wurde und sich nach einem Getränkezubereitungs-Zyklus, im allgemeinen an den tiefsten Stellen der wasserführenden Leitungen, innerhalb der Kaffeemaschine sowie allenfalls in der Brühkammer ansammelt und nicht abfliessen kann. Die Menge des in der Kaffeemaschine verbleibenden Restwassers hängt dabei stark von den konstruktiven Merkmalen der jeweiligen Kaffeemaschine ab.

Dieses Restwasser verbleibt solange in der Maschine, bis ein neuer Getränke-Zubereitungszyklus gestartet wird. Wasser, welches sich vor dem Heisswasserbereiter gesammelt hat, durchströmt diesen beim nächsten Getränke-Zubereitungszyklus wieder, so dass nach dem Erhitzen bezüglich des mikrobiologischen Zustands dieses Wassers kaum Bedenken angebracht werden müssen. Restwasser, welches sich jedoch zwischen dem Heisswasserbereiter und dem Getränkeauslass angesammelt hat, wird bei einem neuen Zyklus nicht mehr erhitzt, sondern vermischt sich mit dem durchströmenden Brühwasser. Da das in der Kaffeemaschine verbleibende Restwasser unter Umständen während längerer Zeit in der Maschine "abgestanden" ist, besteht die Gefahr, dass dieses Restwasser mikrobiologisch bedenklich ist.

Die Problematik von Restwasser, das sich in der Kaffeemaschine sammelt, besteht bei den meisten heute eingesetzten Kaffeemaschinen, insbesondere auch bei Vollautomaten, in denen das Aufbrühwasser das Kaffeepulver in der Brühkammer von unten nach oben durchströmt und insbesondere auch bei Vollautomaten, welche einen hydraulisch angetriebenem Kolben zum Verdichten des Kaffeepulvers aufweisen.

Nebst den Bedenken, die sich bezüglich der Hygiene ergeben, bringt dieses abgestandene Restwasser noch andere Nachteile mit sich. So wird der Geschmack des frisch zubereiteten Kaffeegetränks, dadurch dass sich das abgestandene Restwasser mit dem Frischwasser zum Aufbrühen des Kaffeepulvers durchmischt, negativ beeinflusst. Im weiteren bewirkt dieses abgestandene und daher auch abgekühlte Wasser, dass bei der Durchmischung des abgekühlten mit dem soeben erhitzten Frischwasser die Temperatur dieses Frischwassers herabgesetzt wird, was sich insbesondere bei Zubereitung eines Espressos in einer zu tiefen Temperatur desselben äussert.

Bei bekannten halbautomatischen Kaffeemaschinen, bei denen das Kaffeepulver einem Filterträger durch den Benutzer zudosiert werden muss, wird die Problematik des in der Kaffeemaschine verbleibenden Restwassers im allgemeinen dadurch gelöst, dass dem Benutzer empfohlen wird, die für die Aufnahme des frischen Kaffeegetränks bereitgestellte Kaffeetasse, vor dem eigentlichen Kaffee-Getränke-Zubereitunszyklus, vorzuwärmen, indem die Kaffeemaschine, ohne dass dem Filterträger Kaffeepulver zudosiert wurde, gestartet wird, so dass nur heisses Wasser die Kaffeemaschine durchströmt und in die Kaffeetasse einläuft. Auf diese Weise wird natürlich das vorhandene Restwasser ebenfalls aus der Kaffeemaschine entfernt. Bei vollautomatischen Kaffeemaschinen kann dieses Verfahren jedoch nicht angewendet werden, da bei diesen die Zudosierung von Kaffeepulver vollautomatisch erfolgt und daher nicht bloss heisses Wasser in die Kaffeetasse eingelassen werden kann.

Um die vorstehend geschilderten Nachteile zu vermeiden, ist es Aufgabe der Erfindung, eine Vorrichtung, wie im Oberbegriff des Patentanspruchs 1 beschrieben, zur Zubereitung von Kaffeegetränken derart weiterzubilden, dass ohne Zutun des Benutzers das abgestandene Restwasser, welches sich zwischen der Heisswasserquelle und dem Auslass angesammelt hat, abgeleitet wird, damit sichergestellt wird, dass ein mit einer solchen Kaffeemaschine zubereitetes Kaffeegetränk bezüglich der Temperatur und des Geschmacks den Anforderungen des Benutzers gerecht wird, und dass bezüglich des hygienischen Zustands des Kaffeegetränks keine Vorbehalte angebracht werden müssen.

Die Aufgabe wird durch die im kennzeichnenden Teil des Patentanspruchs 1 beschriebene Vorrichtung gelöst.

In gattungsgemässen Kaffeemaschinen sind die der Verschmutzung unterliegenden Teile oft in einer lösbaren Baugruppe (Austauschmodul) zusammengefasst. Das bedeutet, dass die der Verschmutzung unterliegenden Teile, zur Reinigung derselben, auf einfache Art aus der Maschine entfernbar sein sollten. Dazu muss jedoch mindestens für die Brühwasserzuleitung eine Kupplung vorhanden sein. Die Vorrichtung sieht nun vor, dass das Ventilorgan mit dem Kupplungsorgan zusammen direkt als Kupplung ausgebildet ist. Dadurch ergeben sich natürlich gegenüber einem konventionellen Elektroventil, bei welchem zusätzlich eine separate Kupplung vorhanden sein muss, erhebliche Vorteile in Bezug auf einfache, konstruktive Ausbildung der Vorrichtung und damit in Bezug auf deren Preis wie auch in Bezug auf die Bedienung der Vorrichtung.

Zudem brauchen keine elektrischen Kontakte oder Stecker für die Betätigung der Ventileinrichtung vorhanden zu sein. Auch müssen sicherheitsrelevante Aspekte berücksichtigt werden, da durch eine mechanische Funktionsweise der Ventileinrichtung keine stromführenden Leitungen und Kontakte in der Nähe der wasserführenden Leitungen vorhanden sein müssen. Durch die rein mechanische Funktionsweise dieser bevorzugten Ausführungsform der Ventileinrichtung wird ausserdem eine zuverlässige Funktionsweise gewährleistet. Zudem wird eine Integration in einer lösbaren Baugruppe durch die sehr kompakte Bauweise des Ventilorgans sowie des Kupplungsorgans begünstigt.

Im folgenden wird ein Ausführungsbeispiel des erfindungsgemässen Verfahrens sowie der erfindungsgemässen Vorrichtung anhand der beiliegenden Zeichnungen näher erläutert. In den Zeichnungen zeigen:
- Fig.1: eine prinzipielle Darstellung der Vorrichtung;
- Fig.2 bis 4: eine prinzipielle Darstellung der Funktionsweise der erfindungsgemässen Ventileinrichtung im Zusammenhang mit einer beweglichen, verschwenkbaren Brühkammer während drei verschiedenen Phasen;
- Fig.5: einen Längsschnitt durch die Ventileinrichtung; und
- Fig.6: einen Längsschnitt durch die Ventileinrichtung, der gegenüber dem Längsschnitt in Fig.5 um 90° verdreht ist.

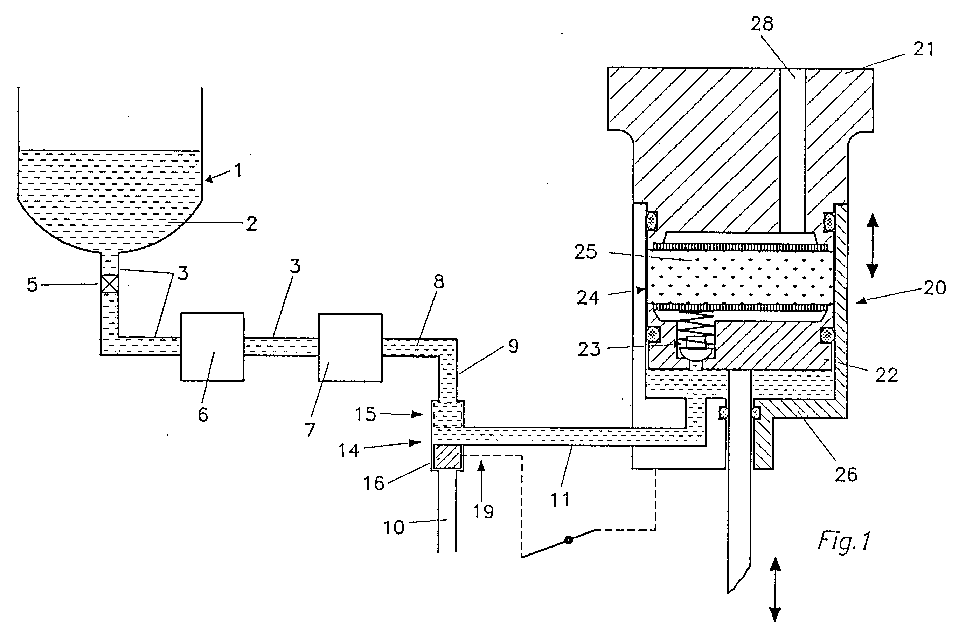

Aus der Fig.1 sind in einer Prinzipdarstellung die wesentlichen Bestandteile einer gattungsgemässen Kaffeemaschine zu sehen. In einem Frischwasserbehälter 1 befindet sich Frischwasser 2. Vom tiefsten Punkt des Frischwasserbehälters 1 führt eine Frischwasserleitung 3 über ein Ventil 5 in eine Pumpe 6. Vom Ausgang der Pumpe 6 führt die Frischwasserleitung 3 in einen Heisswasserbereiter 7. Am Ausgang des Heisswasserbereiters 7 ist eine Zuleitung 9 angeordnet, welche an ihrem Ende in ein Ventilorgan 15 mündet. Durch einen im innern des Ventilorgans 15 angeordneten Ventilkolben 16 kann entweder die Zuleitung 9 mit einer in eine Brühkammer 20 führenden Leitung 11 oder die Leitung 11 mit einer Ableitung 10 verbunden sowie unterbrochen werden. Die Leitung 11 führt vom Ventilorgan 15 in eine bewegliche, verschwenkbare Brühkammer 20 auf die Rückseite eines im innern der Brühkammer 20 angeordneten, beweglichen Kolbens 22.

Die in ihrer Grundform becherförmig gestaltete Brühkammer 20 weist eine zylindrische Wandung sowie an ihrem unteren Ende einen Boden 26 auf. Am oberen offenen Ende der Brühkammer 20 ist ein Verschlusskolben 21 zum Verschliessen der Brühkammer 20 angebracht. Der bewegliche Kolben 22 besitzt einen von seiner Rückseite auf die Oberseite führenden und von einem Kolbenventil 23 verschlossenen Längskanal.

An seinem unteren, rückwärtigen Ende besitzt der bewegliche Kolben 22 ausserdem eine Kolbenstange, welche durch das Brühkammergehäuse nach aussen geführt ist. Durch den Verschlusskolben 21 und den beweglichen Kolben 22 wird ein Brühraum 24 im Innern der Brühkammer 20 begrenzt. Das zum Aufbrühen eines Kaffeegetränks notwendige Kaffeepulver 25 wird bei entferntem Verschlusskolben 21 zudosiert und kommt im Brühraum 24 zu liegen. Der Ventilkolben 16 des Ventilorgans 15 ist zur Betätigung mechanisch mit der beweglichen und verschwenkbaren Brühkammer 20 gekoppelt, was durch eine gestrichelte Linie dargestellt ist.

Die Zubereitung eines Kaffeegetränks wird anhand der Fig. 1 geschildert. Die Ausgangsposition ist dabei die, dass die Brühkammer 20 vorgängig gegen den Verschlusskolben 21 bewegt wurde und dadurch der Verschlusskolben 21 in die Brühkammer 20 eingefahren ist und somit die Brühkammer 20 sowie den Brühraum 24 nach oben abdichtet. Durch das Hochfahren der Brühkammer 20 wurde auch der mechanisch mit der Brühkammer 20 gekoppelte Ventilkolben 16 verschoben und in die untere Stellung bewegt, so dass das Ventilorgan 15 dadurch auf Durchlass geschaltet ist; das heisst, dass zwischen der Zuleitung 9 und der in die Brühkammer 20 führenden Leitung 11 eine Verbindung besteht. Die Koppelung des Ventilkolbens 16 mit der Brühkammer 20 ist in diesem schematischen Ausführungsbeispiel stark vereinfacht dargestellt und wird anhand weiterer, detaillierterer Ausführungszeichnungen nachfolgend noch genauer erklärt.

Aus dem Frischwasserbehälter 1 wird anschliessend über die Frischwasserleitung 3 Wasser 2 durch die Pumpe 6 gefördert und unter Druck gesetzt. Das Frischwasserventil 5 am Ausgang des Frischwasserbehälters 1 ist dazu auf Durchlass geschaltet. Nach der Pumpe 6 durchfliesst das unter Druck stehende Wasser den Heisswasserbereiter 7 und wird dadurch erhitzt.

Vom Heisswasserbereiter 7 fliesst das erhitzte Wasser 8 anschliessend über die Zuleitung 9 und das entsprechend geschaltete Ventilorgan 15 in die radial in einen unteren Fortsatz der Brühkammer 20 führende Leitung 11. Von der Leitung 11 gelangt das Brühwasser 8 schliesslich über einen Kanal auf die Rückseite des beweglichen Kolbens 22.

Dort bewirkt das unter Druck stehende Brühwasser 8, dass der bewegliche Kolben 22 nach oben bewegt wird. Dadurch wird das im Brühraum 24 vorhandene Kaffeepulver 25 verdichtet. Da das Kaffeepulver 25 nicht beliebig kompressibel ist, steigt die durch das Brühwasser 8 auf den beweglichen Kolben 22 sowie auf das Kolbenventil 23 ausgeübte Kraft an. Sobald eine bestimmte Kraft erreicht ist, öffnet das durch eine Feder vorgespannte Kolbenventil 23 und gibt damit die durch den beweglichen Kolben 22 führende Längsbohrung frei, so dass das Brühwasser 8 durch den beweglichen Kolben 22 hindurch in den Brühraum 24 strömen kann und da das Kaffeepulver 25 aufbrüht. Das frisch aufgebrühte Kaffeegetränk fliesst anschliessend durch einen im Verschlusskolben 21 vorhandenen Auslass 28 aus dem Brühraum 24 heraus und in ein entsprechend bereitgestelltes Getränkegefäss hinein.

Sobald die für das Kaffeegetränk notwendige Menge Wasser 2 durch die Pumpe 6 gefördert wurde, wird die Pumpe 6 abgestellt und das Frischwasserventil 5 geschlossen. Nach dem Abstellen der Pumpe 6 sinkt der durch das Brühwasser 8 auf den beweglichen Kolben 22 sowie auf das Kolbenventil 23 ausgeübte Druck ab, so dass das Kolbenventil 23 durch die Federvorspannung den im beweglichen Kolben 22 vorhandenen Längskanal wieder verschliesst. Durch das Schliessen des Frischwasserventils 5 sowie des Kolbenventils 23 bleibt in der Frischwasserleitung 3 sowie in der Brühkammer 20 auf der Rückseite des beweglichen Kolbens 22 eine gewisse Menge nicht für den Aufbrühvorgang benutztes Wasser, welches als Restwasser bezeichnet wird, zurück. Um dieses unerwünschte Restwasser abzuleiten, wird nun der Ventilkolben 16 des Ventilorgans 15 über eine bekannte, der Einfachheit halber hier aber nicht dargestellten Mechanik umgeschaltet, d.h. an seinen oberen Endanschlag bewegt, so dass nun die in die Brühkammer 20 führende Leitung 11 über das Ventilorgan 15 mit der Ableitung 10 verbunden ist. Dadurch kann Restwasser, welches sich auf der Rückseite des beweglichen Kolbens 22 sowie in der Leitung 11 angesammelt hat, durch die Ableitung 10 abfliessen. Dieses Abfliessen wird ausserdem durch den beweglichen Kolben 22, welcher mechanisch an eine nicht dargestellte Antriebsvorrichtung angekoppelt und von dieser nach unten gegen den Boden 26 der Brühkammer 20 bewegt wird, begünstigt, da durch diese Abwärtsbewegung das auf der Rückseite des beweglichen Kolbens 22 befindliche Restwasser verdrängt wird.

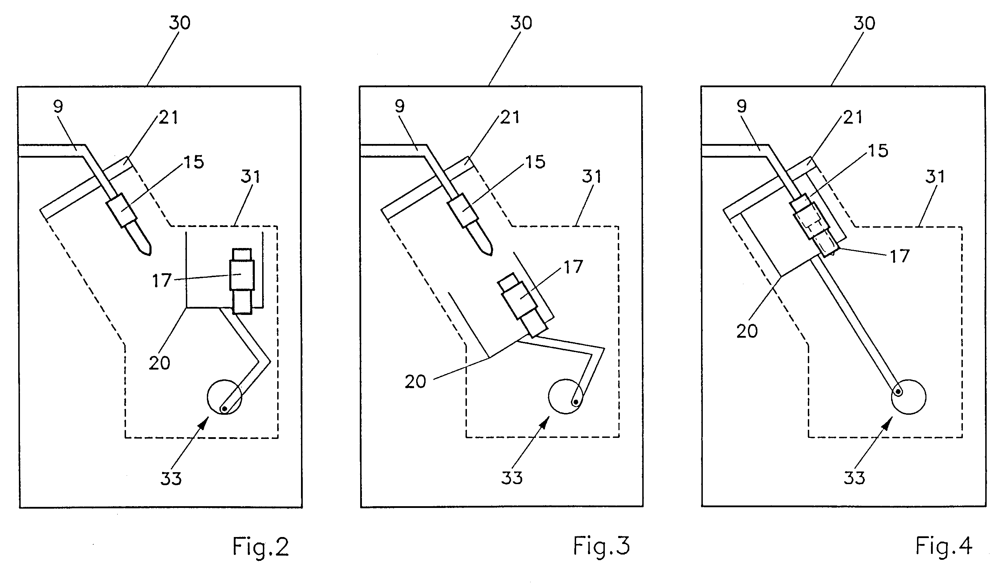

Anhand der Figuren 2 bis 4 wird die Funktionsweise der Ventileinrichtung 14, welche aus dem Ventilorgan 15 sowie dem Kupplungsorgan 17 besteht, im Zusammenhang mit einer lösbaren Baugruppe 31 erläutert. Um eine Übersichtliche Darstellung zu ermöglichen, wurden nur die in diesem Zusammenhang wichtigen Bestandteile der erfindungsgemässen Vorrichtung dargestellt.

Die oben offene Brühkammer 20 wird über einen mechanischen Antrieb 33 angetrieben. Die Brühkammer 20 kann durch diesen auf ihrer Unterseite angreifenden Antrieb 33 sowohl verschwenkt wie auch nach oben und unten bewegt werden. An der verschwenkbaren Brühkammer 20 ist zudem das Kupplungsorgan 17 befestigt, welches eine in die Brühkammer 20 führende Leitung 11 besitzt. Um die Brühkammer 20 zu verschliessen ist der Verschlusskolben 21 so angeordnet, dass die Brühkammer 20 in ihrer oberen Endstellung durch diesen Verschlusskolben 21 auf ihrer offenen Seite abgedichtet wird. Diese vorgängig erwähnten Bestandteile sind in einer gestrichelt angedeuteten, lösbaren Baugruppe 31 zusammengefasst. Diese Baugruppe ist mittels einer an sich bekannten, hier aber nicht näher dargestellten mechanischen Verriegelung in der Vorrichtung befestigbar. Eine solche lösbare Baugruppe ist zudem aus der EP-OS 0 154 206 bekannt. Das Ventilorgan 15 ist über ein Gewinde an der Zuleitung 9 befestigt. Die Zuleitung 9 ist dabei an einem das ganze umschliessenden Gehäuse 30 befestigt. Der in der Brühkammer 20 angeordnete, bewegliche Kolben wurde zugunsten einer besseren Übersicht ebenfalls weggelassen.

Aus der Fig. 2 ist die bewegliche Brühkammer 20 in ihrer Ausgangsstellung ersichtlich. Die Brühkammer 20 wurde dazu in ihre untere rechte Position bewegt. In dieser Stellung ist das an der Zuleitung 9 befestigte Ventilorgan 15 aus dem Kupplungsorgan 17 ausgefahren, so dass kein Brühwasser 8 über das Ventilorgan 15 und das Kupplungsorgan 17 in die Brühkammer 20 gelangen kann. In dieser Stellung kann zudem das gesamte Austauschmodul 31, in Blickrichtung gesehen nach hinten, aus dem Gehäuse 30 entfernt werden kann. Diese Stellung entspricht im übrigen der Ableitposition, in welcher das Restwasser aus der Vorrichtung abfliessen kann.

In der Fig. 3 ist die bewegliche Brühkammer 20 in einer Zwischenstellung ersichtlich. Die Brühkammer 20 wurde dazu durch den Antrieb 33 nach links verschwenkt. In dieser Stellung besteht zwischen dem Ventilorgan 15 und dem Kupplungsorgan 17 noch immer keine Verbindung.

In der Fig. 4 ist die Brühkammer 20 in der Brühstellung dargestellt. Dazu wurde die bewegliche Brühkammer 20 aus ihrer verschwenkten Position nach oben gegen den Verschlusskolben 21 bewegt, so dass die Oberseite der Brühkammer 20 nun durch den Verschlusskolben 21 verschlossen ist. Bei dieser schräg nach oben gerichteten Bewegung wurde das an der Brühkammer 20 befestigte Kupplungsorgan 17 natürlich ebenfalls nach oben bewegt. Durch diese Relativbewegung wurde das Ventilorgan 15 in das Kupplungsorgan 17 eingefahren. Somit besteht nun zwischen der Zuleitung 9 und der in die Brühkammer 20 führenden Leitung 11 eine Verbindung, so dass Brühwasser 8 über das gemeinsam mit dem Kupplungsorgan 17 als Kupplung ausgebildete Ventilorgan 15 in die Brühkammer 20 gelangen kann und darin das Kaffeepulver 25 aufbrühen kann.

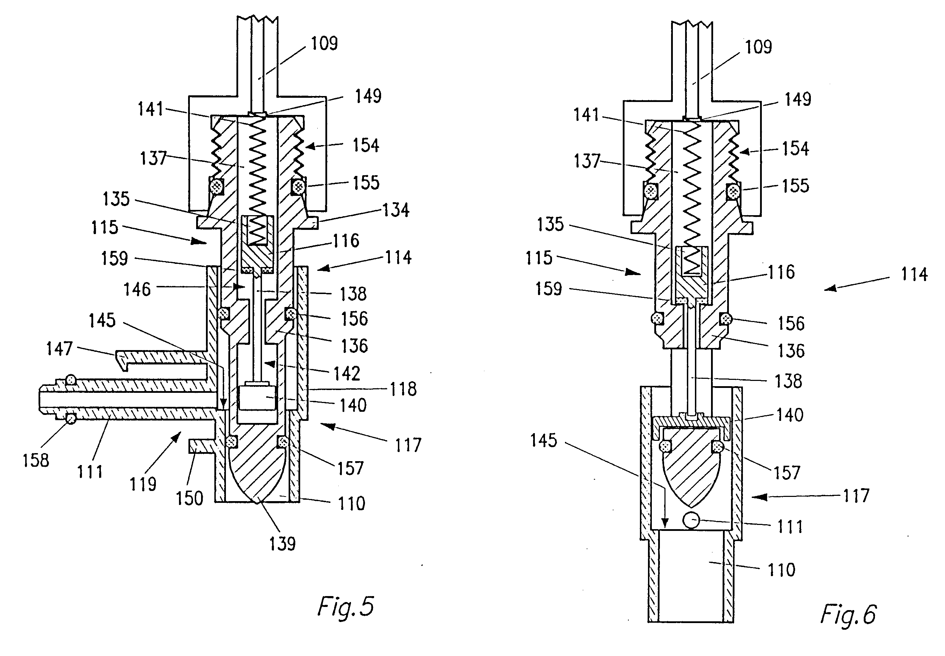

In den Fig. 5 und 6 ist die Ventileinrichtung 114 in einer praktischen Ausführungsform dargestellt. die Ventileinrichtung besteht im wesentlichen aus einem länglichen Ventilorgan 115 sowie einem als Abzweigrohrstück ausgebildetes Kupplungsorgan 117. Das Ventilorgan 115 weist dabei einen Ventilkörper 136 mit einem darin angeordneten Ventilkolben 116 sowie einen Betätigungsbügel 140 und eine Feder 141 auf.

Am oberen Ende des Ventilkörpers 136 ist ein Aussengewinde 154 angebracht. Am unteren Ende dieses Gewindes 154 folgt eine Nut, in welche ein den Ventilkörper 136 umfassender Dichtring 155 eingelassen ist. Daran anschliessend folgt eine Abschrägung, die in einen Bund 134 übergeht, der seinerseits als Sechskant-Schlüsselansatz ausgebildet ist. An diesen Bund 134 schliesst sich ein zylindrischer Teil an, der an seinem unteren Ende wiederum eine Nut mit einem den Ventilkörper 136 umfassenden Dichtring 156 aufweist. Weiter der äusseren Form des Ventilkörpers 136 folgend weist dieser danach wiederum eine Abschrägung und einen an die Abschrägung anschliessenden zylindrischen Abschnitt auf, wobei dieser in seinem Durchmesser kleiner ist als der vorhergehende zylindrische Abschnitt. Durch diesen unteren zylindrischen Abschnitt führt ein quer in den Ventilkörper 136 eingelassener, rechteckiger Kanal 142. Am unteren Ende dieses zylindrischen Abschnitts ist wiederum eine Nut mit einem den Ventilkörper 136 umfassenden Dichtring 157 vorhanden. Der untere an diese letzte Nut anschliessende Abschnitt 139 des Ventilkörpers 136 ist konisch verjüngt ausgeführt.

Im Innern des Ventilkörpers 136 ist eine von der Oberseite in den Ventilkörper 136 hineinführende zentrale Bohrung 137 angebracht, welche an ihrem unteren Ende in den rechteckigen Kanal 142 mündet. Diese Bohrung 137 besitzt eine zylindrische Verengung auf der Höhe des zweiten, mittleren Dichtrings 156. Durch die Verengung entsteht auf der Oberseite derselben ein Bund. Der rechteckige Kanal 142 ist so ausgebildet, dass er den U-förmigen Betätigungsbügel 140 aufnehmen kann und diesem gleichzeitig auch als vertikale Führung dient.

Auf der Rückseite des Betätigungsbügels 140 ist eine Blindbohrung vorhanden. Der Verbindungssteg des Betätigungsbügels 140 liegt im Ruhezustand am Boden des rechteckigen Kanals 142 auf, währenddem die beiden Schenkel des Betätigungsbügels 140, in senkrechtem Winkel zum Boden des Kanals 142 nach unten, ausserhalb des Kanals 142 den Ventilkörper 136 überlappen. Der im Innern der zentralen Bohrung 137 geführte Ventilkolben 116 weist an seinem unteren Ende eine Verbindungsstange 138 auf. Diese Verbindungsstange 138 korrespondiert in ihrer horizontalen Lage mit der auf der Oberseite des Betätigungsbügels 140 vorhandenen Blindbohrung. Die Verbindungsstange 138 reicht in ihrer vertikalen Ausdehnung bis in diese Blindbohrung hinein. Dadurch kann der Ventilkolben 116 über die Verbindungsstange 138 durch den Betätigungsbügel 140 betätigt werden. Um die zylindrische Bohrung 137 am Bund ihrer zylindrischen Verengung durch den Ventilkolben 116 abdichten zu können, besitzt der Ventilkolben 116 an seinem unteren Ende eine ringförmige Dichtung 159, währenddem auf seiner Oberseite eine Sackbohrung 135 in ihn hineingebohrt ist.

Mittels des Gewindes 154 ist der Ventilkörper 136 und damit das Ventilorgan 115 in ein entsprechendes, an der Zuleitung 109 bestehendes Gewinde eingeschraubt, so dass zwischen der Zuleitung 109 und der im Ventilkörper 136 vorhandenen Bohrung 137 eine Verbindung besteht. Die Zuleitung 109 weist an ihrem, dem Ventilorgan 115 zugewandten Ende eine ringförmige Vertiefung 149 mit einem etwas grösseren Durchmesser als der Innendurchmesser der Zuleitung 109 auf. Zwischen der Vertiefung 149 und der Sackbohrung 137 des beweglichen Ventilkolbens 116 ist die Feder 141 eingespannt. Durch diese unter einer Vorspannung stehenden Feder 141 wird der bewegliche Ventilkolben 116 nach unten gegen den Bund der Verengung gedrückt, so dass die Dichtung 159 des Ventilkolbens 116 auf diesem Bund aufsteht und diesen somit abdichtet. Durch sein Eigengewicht sowie die Vorspannkraft der Feder 141 wird der Betätigungsbügel 140 ebenfalls nach unten gedrückt, so dass der Verbindungssteg des Betätigungsbügels 140 am Boden des rechteckigen Kanals 142 aufsteht. Dies entspricht der Ruhestellung des Ventilorgans 115.

Das Kupplungsorgan 117 weist ein radial wegführendes Abzweigrohr 119 auf, welches einen kleineren Innendurchmesser als die Bohrung des Rohrstücks 118 selber aufweist. Die vertikal durch das Abzweigrohrstück 118 führende Bohrung besitzt dabei zwei unterschiedliche Durchmesser. Da die Bohrung eine zylindrische Form aufweist wird durch den Übergang vom grösseren oberen Durchmesser auf den kleineren unteren Durchmesser ein Bund 145 gebildet. Um das Rohrstück 118 an der Brühkammer 20 zu befestigen, ist oberhalb des Abzweigrohres 119 ein radial vom Rohrstück 118 parallel zum Abzweigrohr 119 abstehender, federnder Rasthaken 147 angebracht. Der unter dem Abzweigrohr 119 angebrachte, radial vom Rohrstück 118 abstehende Führungsnocken 150 dient der Führung beim Befestigen des Kupplungsorgans 117 an der Brühkammer 20, damit dieses in der richtigen Position angebracht wird. Am Ende des Abzweigrohrs 119 ist zur Abdichtung ein Dichtring 158 angebracht.

Aus der Fig. 5 ist das Ventilorgan 115 in der Stellung zu sehen, in welcher Brühwasser 8 über die Zuleitung 109 und das Ventilorgan 115 in das Abzweigrohr 119 und damit in die Brühkammer 20 gelangen kann.

Das Ventilorgan 115 ist dazu mit seinem unteren Ende soweit in das Rohrstück 118 eingefahren, bis das untere Ende des Ventilorgans 115 in etwa bündig mit der Unterkante des Rohrstücks 118 zu liegen kommt. Das Einfahren des Ventilorgans 115 in das Rohrstück 118 wird durch die konisch verjüngte Form des Ventilkörpers 116 an seinem unteren Ende 139 erleichtert. Durch das Einfahren des Ventilorgans 115 steht der Betätigungsbügel 140 am Bund 145 der Verengung des Rohrstücks 118 auf, so dass dadurch der durch die Feder 141 vorgespannte Ventilkolben 116 über die Verbindungsstange 138 nach oben gedrückt wird. Somit entsteht zwischen dem Dichtring 159 des Ventilkolbens 116 und dem in der Sackbohrung 137 des Ventilkörpers 136 bestehenden Bund ein Spalt 146. Dadurch kann nun Brühwasser 8, über die Zuleitung 109 und die Bohrung 137 des Ventilorgans 115, in das Abzweigrohr 119 und von da über die Leitung 111 in die Brühkammer 20 auf die Rückseite des beweglichen Kolbens 22 strömen. Der Weg des Brühwasser 8 von der Rückseite des beweglichen Kolbens 22 in den Brühraum 24 wurde in Fig. 1 beschrieben.

Durch den an der Wandung der Ableitung 110 anliegenden Dichtring 157 des Ventilorgans 115 wird während dieser Phase sichergestellt, dass kein Brühwasser 8 in die Ableitung 110 gelangt. Damit das unter Druck stehende Brühwasser 8 nicht nach oben aus dem Abzweigrohrstück 118 entweichen kann, liegt der Dichtring 156 des Ventilorgans 115 an der oberen Wandung des Rohrstücks 118 an. Der oberste Dichtring 155 des Ventilorgans 115, am Ende des Gewindes 154, dichtet die Zuleitung 109 gegenüber dem Ventilkörper 136 an dessen Aussenseite ab.

Aus der Fig. 6 ist die Ventileinrichtung 114 in derjenigen Position zu sehen, in der das Restwasser abfliessen kann. Dazu wurde das Ventilorgan 115 soweit nach oben bewegt, bis der mittlere Dichtring 156 etwas aus dem Rohrstück 118 ausgefahren ist. Dadurch dichtet der Dichtring 157 die Ableitung 110 nicht mehr ab, so dass nun zwischen dem Abzweigrohr 119 und der Ableitung 110 und damit zwischen der Leitung 111 und der Ableitung 110 eine Verbindung besteht. Dies ist notwendig, damit das beim Zurückfahren des beweglichen Kolbens 22 verdrängte Wasser über die Leitung 111 in die Ableitung 110 gelangen und dadurch aus der Vorrichtung abfliessen kann.

Durch das Zurückfahren des Ventilorgans 115 steht nun auch der Betätigungsbügel 140 nicht mehr am Bund 145 des Rohrstücks 118 auf, so das der Ventilkolben 116 und der Betätigungsbügel 140 durch die Feder 141 nach unten gedrückt werden. Somit steht nun die Dichtung 159 des Ventilkolbens 116 am Bund der Verengung der Bohrung 137 auf und dichtet damit die Bohrung 137 ab. Dies bedeutet, dass in dieser Stellung kein Brühwasser 8 durch das Ventilorgan 115 der Ventileinrichtung 114 in die Brühkammer 20 gelangen kann. Durch die Ausbildung des Ventilkolbens 116 mit einer Sackbohrung 137 auf seiner Rückseite wird das Abdichten der Bohrung 137 durch die Dichtung 159 am Bund dieser Bohrung 137 begünstigt, da im Falle einer ungewollten Brühwasserzufuhr das Brühwasser 8 den Ventilkolben 116 zusätzlich zur Feder 141 nach unten drückt.

Die mechanische Betätigung des Ventilkolbens 116 über den Betätigungsbügel 140 erfolgt wie bereits vorgängig beschrieben auch bei diesen beiden Ausführungsbeispielen über den Bund 145 des Kupplungsorgan 117 welches an der Brühkammer 20 befestigt und somit mit diesem zwangsgekoppelt gekoppelt ist.

Durch die vorstehend beschriebenen Massnahmen wird gewährleistet, dass das sich nach dem Aufbrühvorgang in der Vorrichtung befindliche Restwasser möglichst vollständig aus der Vorrichtung abgeleitet wird, und dass sich dadurch für den Benutzer einer solchen Kaffeemaschine ein im Geschmack sowie in der Temperatur wunschgemässes Getränk ergibt, und dass dieses Getränk ausserdem bezüglich seines hygienischen, mikrobiologischen Zustands einwandfrei ist.

## Patentansprüche

1. Vorrichtung zur Zubereitung von Kaffeegetränken, welche im wesentlichen einen Heisswasserbereiter (7) zum Erhitzen von Frischwasser (2), eine Brühkammer (24), eine Brühkammerzuleitung (11), einen beweglich in einem Brühzylinder (20) angeordneten Kolben (22) zum Verdichten des in der Brühkammer (24) aufzubrühenden Kaffeepulvers (25) sowie einen Auslass (28) für das zubereitete Kaffeegetränk aufweist, wobei der Kolben (22) und das Kaffeepulver in der Brühkammer (24) vom Brühwasser (8) von unten nach oben durchströmt wird, und eine Ventileinrichtung (14, 114) zur Ableitung von sich im Brühzylinder (20) sowie in der Brühkammerzuleitung (11) angesammeltem Restwasser vorgesehen ist, dadurch gekennzeichnet, dass die Ventileinrichtung (14, 114) ein bezüglich der Vorrichtung ortsfestes Ventilorgan (15, 115) mit einem Brühwasseranschluss und ein bezüglich der Vorrichtung bewegliches und mit dem Brühwasseranschluss kuppelbares und vom Ventilorgan einfahrbares Kupplungsorgan (17, 117) mit einem Brühkammeranschluss sowie mit einem Restwasserauslass (10, 110) aufweist, und der Restwasserauslass während des Aufbrühens vom Ventilorgan gesperrt, und zwischen zwei Kaffeezubereitungszyklen vom Ventilorgan freigegeben wird.

2. Vorrichtung nach Anspruch 1, dadurch gekennzeichnet, dass das Kupplungsorgan (17, 117) als Rohrstück (118) mit einer Abzweigung (119) ausgebildet ist.

3. Vorrichtung nach Anspruch 2, dadurch gekennzeichnet, dass die Abzweigung (119) des Rohrstücks (118) als Brükammerzuleitung (111) ausgebildet ist, welche am Brühzylinder (20) steckbar und lösbar befestigt ist.

4. Vorrichtung nach Anspruch 3, dadurch gekennzeichnet, dass das Rohrstück (118) zwei verschiedene Innendurchmesser aufweist, wobei am Übergang der beiden Durchmesser ein Bund (145) ausgebildet ist.

5. Vorrichtung nach einem der Ansprüche 2 bis 4, dadurch gekennzeichnet, dass das Ventilorgan (15, 115) einen mit dem Kupplungsorgan (17, 117) in der Form korrespondierenden Vorderteil aufweist, so dass das Ventilorgan (15, 115) mit dem Kupplungsorgan (17, 117) zusammenkuppelbar bzw. vollstandig von diesem lösbar ist.

6. Vorrichtung nach einem der Ansprüche 1 bis 5, dadurch gekennzeichnet, dass das Ventilorgan (15, 115) eine zentrale Bohrung (137) aufweist, in der ein mechanisch betätigbarer, als Schliessorgan für die Bohrung (137) ausgebildeter Ventilkolben (16, 116) angeordnet ist, und dass eine Feder (141) vorhanden ist, die den Ventilkolben (16, 116) in seiner unteren, die Bohrung (137) verschliessenden Stellung zu halten bestrebt ist.

7. Vorrichtung nach Anspruch 6, dadurch gekennzeichnet, dass der Ventilkolben (16, 116) eine Sackbohrung (135) aufweist, welche mit unter Druck stehendem Brühwasser (8) beaufschlagbar und dadurch den Ventilkolben (16, 116) zusätzlich in seiner unteren Stellung zu halten bestrebt ist.

8. Vorrichtung nach Anspruch 6 oder 7, dadurch gekennzeichnet, dass der Ventilkolben (16, 116) des Ventilorgans (15, 115) mechanisch durch das Kupplungsorgan (17, 117) betätigbar ist, wobei das Kupplungsorgan (17, 117) durch eine zum Antrieb des Brühzylinders (20) oder des Verschlusskolbens (21) vorgesehene Antriebsvorrichtung antreibbar ist.

9. Vorrichtung nach einem der Ansprüche 6 bis 8, dadurch gekennzeichnet, dass zur Verschiebung des Ventilkolbens (16, 116) ein Betätigungsbügel (140) vorgesehen ist, welcher durch das Kupplungsorgan (117) an dessen Bund (145) betätigbar ist.

10. Vorrichtung nach einem der Ansprüche 3 bis 9, dadurch gekennzeichnet, dass die Brühkammerzuleitung (111) des Rohrstücks (118) als gemeinsamer Teil einer Leitung (11) ausgebildet ist, über den die Zuleitung des Brühwassers (8) in den Brühzylinder (20) wie auch die Ableitung des Restwassers erfolgt.

11. Vorrichtung nach einem der Ansprüche 1 bis 10, dadurch gekennzeichnet, dass die der Verschmutzung unterliegenden Teile in einer lösbaren Baugruppe (31) zusammengefasst sind, welche eine an eine Brühwasserzuleitung (9, 109) an-\bzw. abkuppelbare Brükammerzuleitung (11, 111) aufweist.

## Claims

1. Coffee-making device, which comprises essentially a water heater (7) for heating fresh water (2), a brewing chamber (24), a brewing chamber feed pipe (11), a piston (22) arranged to move in a brewing cylinder (20) for compressing the coffee powder (25) to be brewed in the brewing chamber (24) as well as an outlet (28) for the prepared coffee drink, the brewing water (8) flowing from the bottom upwards through the piston (22) and the coffee powder in the brewing chamber (24) and a valve device (14, 114) being provided for draining residual water which has collected in the brewing cylinder (20) as well as in the brewing chamber feed pipe (11), characterized in that the valve device (14, 114) comprises a valve member (15, 115) which is stationary with respect to the device, with a brewing water connection and a coupling member (17, 117) able to move with respect to the device, able to be connected to the brewing water connection and able to be inserted by the valve member, with a brewing chamber connection and with a residual water outlet (10, 110) and the residual water outlet being blocked by the valve member during brewing and being released by the valve member between two coffee-making cycles.

2. Device according to Claim 1, characterized in that the coupling member (17, 117) is constructed as a tubular member (118) with a branch (119).

3. Device according to Claim 2, characterized in that the branch (119) of the tubular member (118) is constructed as a brewing chamber feed pipe (111), which is attached to the brewing cylinder (20) so that it can be plugged-in and released.

4. Device according to Claim 3, characterized in that the tubular member (118) has two different internal diameters, a collar (145) being formed at the transition between the two diameters.

5. Device according to one of Claims 2 to 4, characterized in that the valve member (15, 115) comprises a front part corresponding in shape to the coupling member (17, 117), so that the valve member (15, 115) can be coupled to the coupling member (17, 117) or can be released completely therefrom.

6. Device according to one of Claims 1 to 5, characterized in that the valve member (15, 115) comprises a central bore (137), in which is located a valve piston (16, 116) able to be actuated mechanically and constructed as a closing member for the bore (137), and that a spring (141) is provided, which attempts to keep the valve piston (16, 116) in its lower position closing the bore (137).

7. Device according to Claim 6, characterized in that the valve piston (16, 116) comprises a blind bore (135), which can be acted upon by brewing water (8) which is under pressure and consequently additionally attempts to keep the valve piston (16, 116) in its lower position.

8. Device according to Claim 6 or 7, characterized in that the valve piston (16, 116) of the valve member (15, 115) can be actuated mechanically by the coupling member (17, 117), the coupling member (17, 117) being able to be driven by a driving device provided for driving the brewing cylinder (20) or the closing piston (21).

9. Device according to one of Claims 6 to 8, characterized in that provided for displacing the valve piston (16, 116) is an actuating bracket (140) which can be actuated by the coupling member (117) on its collar (145).

10. Device according to one of Claims 3 to 9, characterized in that the brewing chamber feed pipe (111) of the tubular member (118) is constructed as a common part of a pipe (11), by which the supply of brewing water (8) into the brewing cylinder (20) as well as the drainage of the residual water takes place.

11. Device according to one of Claims 1 to 10, characterized in that the parts subject to fouling are combined in a releasable subassembly (31), which comprises a brewing chamber feed pipe (11, 111) able to be connected to or disconnected from a brewing water feed pipe (9, 109).

## Revendications

1. Dispositif pour la préparation de café, qui comprend pour l'essentiel un chauffe-eau (7) pour le réchauffement de l'eau fraîche (2), une chambre d'infusion (24), une arrivée à la chambre d'infusion (11), un piston disposé de façon mobile dans un cylindre d'infusion (20) pour le compactage de la poudre de café (25) à infuser dans la chambre d'infusion (24) et une sortie (28) pour le café préparé, le piston (22) et le café en poudre étant traversés dans la chambre d'infusion (24) par l'eau d'infusion (8) du haut vers le bas et un système à soupape (14, 114) étant prévu pour l'évacuation de l'eau restant accumulée dans le cylindre d'infusion (20) et dans la conduite d'arrivée de la chambre d'infusion (11), caractérisé on ce que le système à soupape (14, 114) présente un organe de soupape (15, 115) fixe par rapport au dispositif avec un raccordement d'eau d'infusion et un organe d'accouplement (17, 117) mobile par rapport au dispositif, qui peut être couplé avec le raccordement d'eau d'infusion et peut être introduit à partir de l'organe de soupape, avec un raccordement de chambre d'infusion et avec une sortie d'eau résiduelle (10, 110) et en ce que la sortie d'eau résiduelle est bloquée par l'organe de soupape pendant l'infusion et est libérée par l'organe de soupape entre deux cycles de préparation de café.

2. Dispositif selon la revendication 1, caractérisé en ce que l'organe d'accouplement (17, 117) est constitué comme un bout de tuyau (118) avec une dérivation (119).

3. Dispositif selon la revendication 2, caractérisé en ce que la dérivation (119) du bout de tuyau (118) est réalisée comme une arrivée de chambre d'infusion (111) qui est fixée de façon emboîtable et détachable sur le cylindre d'infusion.

4. Dispositif selon la revendication 3, caractérisé en ce que le bout de tuyau (118) présente deux diamètres intérieurs différents, une collerette étant réalisée à la transition des deux diamètres.

5. Dispositif selon l'une quelconque des revendications 2 à 4, caractérisé en ce que l'organe de soupape (15, 115) présente une partie avant correspondant dans la forme à l'organe d'accouplement (17, 117), de façon que l'organe de soupape (15, 115) puisse être coupé avec l'organe d'accouplement (17, 117) et puisse être détaché complètement de celui-ci.

6. Dispositif selon l'une quelconque des revendications 1 à 5, caractérisé en ce que l'organe de soupape (15, 115) présente un alésage (137) central dans lequel est disposé un piston à soupape (16, 116) se présentant sous la forme d'un organe de fermeture pour l'alésage (137), et en ce qu'il existe un ressort (141) qui s'applique à maintenir le piston à soupape (16, 116) dans sa position inférieure fermant l'alésage (137).

7. Dispositif selon la revendication 6, caractérisé en ce que le piston à soupape (16, 116) présente un alésage de sac (135), lequel peut être alimenté avec de l'eau d'infusion (8) sous pression et s'applique ainsi à maintenir le piston à soupape (16, 116) en supplément dans sa position inférieure.

8. Dispositif selon la revendication 6 ou 7, caractérisé en ce que le piston à soupape (15, 115) peut être actionné mécaniquement par l'organe d'accouplement (17, 117), l'organe d'accouplement (17, 117) pouvant être actionné mécaniquement par un dispositif de commande prévu pour l'entraînement du cylindre d'infusion (20) ou du piston de fermeture (21).

9. Dispositif selon l'une quelconque des revendications 6 à 8, caractérisé en ce que, pour le déplacement du piston à soupape (16, 116), il est prévu un étrier d'actionnement (140) qui peut être actionné par l'organe d'accouplement (117) sur sa collerette (145).

10. Dispositif selon l'une quelconque des revendications 3 à 9, caractérisé en ce que l'arrivée de la chambre d'infusion (111) du bout de tuyau (118) est réalisée comme une partie commune d'une conduite (11) par laquelle s'effectuent l'arrivée de l'eau d'infusion (8) dans le cylindre d'infusion (20) et l'évacuation de l'eau restante.

11. Dispositif selon l'une quelconque des revendications 1 à 10, caractérisé en ce que les parties soumises à l'encrassement sont regroupées dans un ensemble (31) détachable présentant une arrivée de chambre d'infusion (11, 111) que l'on peut accoupler ou désaccoupler sur une arrivée d'eau d'infusion (11, 111).
